# EUROPÄISCHE PATENTANMELDUNG

(11) **EP 1 727 308 A1**
(43) Veröffentlichungstag der Anmeldung: **29.11.2006**
(21) Anmeldenummer: 06010032.8
(22) Anmeldetag: 16.05.2006
(51) Int. Cl.: H04L 5/06

(54) **Verfahren zum Modulieren , Modulator und Verwendung des Modulators in einer Kabelkopfstelle**

(30) Priorität: 23.05.2005 DE 102005024169
(71) Anmelder: Astro Strobel Kommunikationssysteme GmbH, 51427 Bergisch-Gladbach (DE)
(72) Erfinder: Wessollek, Thorsten, 44143 Dortmund (DE); Mondwurf, Stephan, Dr., 51375 Leverkusen (DE); El-Bardawil, Adnan, Dr., 40723 Hilden (DE)
(74) Vertreter: Wolff, Felix

(57) **Zusammenfassung**

Die vorliegende Erfindung betrifft ein Verfahren zur Modulation eines Rundfunksignals, insbesondere für eine Gemeinschaftsanlage oder eine Kabelkopfstelle zur Verteilung von digitalen Audiosignalen, Videosignalen und/oder Datensignalen an einen oder mehrere Endverbraucher und insbesondere zur Umsetzung eines oder mehrerer digitaler Fernseh- und/oder Radioprogramme, wobei das Rundfunksignal zumindest ein erstes Basisband-Signal und ein zweites Basisband-Signal umfasst, wobei die Umsetzung des ersten Basisband-Signals und des zweiten Basisband-Signals vollständig digital erfolgt und die Addition des ersten Basisband-Signals und des zweiten Basisband-Signals zu einem Gesamtsignal umfasst.

## Beschreibung

Die vorliegende Erfindung betrifft ein Verfahren zur Modulation eines ersten Basisband-Signals und eines zweiten Basisband-Signals, eine Modulator zur Durchführung des Verfahrens sowie die Verwendung des Modulators in einer Kabelkopfstelle.

Im Hör-Rundfunk ist, um den Multimediaanforderungen der Verbraucher gerecht zu werden, zum frequenzmodulierten (FM) UKW-Rundfunk der RDS (Radio Data System) eingeführt worden, um Zusatzdienste wie beispielsweise gleichzeitig mit einem Musikstück übertragene Texte oder weitere, nicht zum Hörprogramm gehörende Daten wie beispielsweise Börsenkurse und andere Informationen, bereitzustellen.

Zur Übertragung von Fernsehen wird das Videosignal durch zeilenweises Abtasten des Bildes in ein eindimensionales Videosignal gewandelt, wobei Synchronisationsinformationen für die Rekonstruktion des Bildes zugefügt werden. Beim Schwarzweißfernsehen wird das Bild durch das BAS-Signal dargestellt (Bild-Austastlücke-Synchronisation), wobei die Helligkeit der Bildpunkte durch einen Spannungspegel zwischen 0% (schwarz) und 100% (weiß) angegeben, und zur trägerfrequenten Übertragung eine Restseitenband-Modulation (VSB, Vestigial Sideband) angewandt wird. Das Audiosignal wird frequenzmoduliert, in der Frequenzlage zum Bildträger hinzuaddiert und dann über den Kanal übertragen. Beim Farbfernsehen wird das RGB-Signal in ein Luminanzsignal (Helligkeitsinformation) und ein Chrominanzsignal (Farbinformation), und diese gemeinsam zum FBAS-Signal (Farb-BAS) umgewandelt. Die Verfahren zur Farbübertragung beim analogen Fernsehen sind in verschiedenen Normen, insbesondere den NTSC- (National Television Systems Commitee, NTSC-M), PAL-(Phase Alternating Line, PAL-B/G, -D/K, -I, -N, -CN, -M) und SECAM-Normen (Sequentiel Couleur Avec Mèmoire, SECAM-D, -K), definiert. Die Normen unterscheiden sich beispielsweise in der Anzahl der pro Sekunde übertragenen Vollbilder, der Zeilenzahl pro Bild, der Abtastfrequenz und dem verwendeten Farbsystem.

Auch für die Übertragung von Fernsehprogrammen wurden digitale Kanäle eingeführt:
- DVB-S: (Digital Video Broadcasting über Satellit)
- DVB-C: (über Koaxialkabelnetze)
- DVB-T: (über terrestrische VHF/UHF-Netze).

In Abhängigkeit vom verwendeten Kanal werden verschiedene Modulationsverfahren für die Übertragung der digitalen Fernseh- und der digitalen Hör-Rundfunksignale verwendet. Bei der Satellitenübertragung wird insbesondere mit QPSK (Quadratur Phase Shift Keying) moduliert, bei der Übertragung über Koaxialkabelnetze wird insbesondere die QAM (Quadratur- Amplitudenmodulation) verwendet, und bei der terrestrischen Übertragung kommt insbesondere das Verfahren COFDM (Coded Orthogonal Frequency Division Multiplex) zum Einsatz.

Auf der Empfängerseite finden insbesondere Überlagerungsempfänger Verwendung (Superhet Empfänger). Überlagerungsempfänger arbeiten mit einem Demodulator, der auf einer fixen Frequenz, der sogenannten Zwischenfrequenz arbeitet. Jedes Signal eines Senders, im Folgenden Rundfunksignal genannt, kann durch Überlagerung einer lokal im Empfänger erzeugten Oszillatorfrequenz in den Bereich der Zwischenfrequenz verschoben werden. Dafür wird das Rundfunksignal gegebenenfalls zunächst verstärkt und dann mit der Oszillatorfrequenz gemischt. Das Ausblenden des gewünschten Rundfunksignals aus dem aus mehreren Rundfunksignalen bestehenden Signalgemisch kann aufgrund der Verschiebung des Rundfunksignals in den Zwischenfrequenz- Bereich mit einem einzigen im Zwischenfrequenz- Bereich festeingestellten Bandfilter erfolgen. Nach dem Mischen wird das Rundfunksignal in einem Demodulator, der an die im Sender verwendete Modulation angepasst ist, demoduliert.

Um ein aus dem Signalgemisch gefiltertes digitales Rundfunksignal in einer Gemeinschaftsanlage auf mehrere Endverbraucher zu verteilen, wird dieses herkömmlich in ein analoges Signal im Basisbandbereich gewandelt, analog aufbereitet und abschließend in den Hochfrequenzbereich überführt. Es sind auch Gemeinschaftsanlagen bekannt, in denen diese Umsetzung teilweise digital erfolgt, in denen daher beispielsweise die Preemphase oder die Frequenzmodulation des Audiosignals digital erfolgt. Das vom Basisbandbereich in den Hochfrequenzbereich umgesetzte Signal (beim Fernsehen: beispielsweise ein VHF/UHF-Signal, beim Radio beispielsweise ein UKW-Signal) kann vom Fernsehen bzw. vom Radio als Eingangssignal verwendet werden.

Die analoge Bearbeitung des Rundfunksignals, insbesondere das Filtern, die Addition und die Multiplikation von Signalanteilen, bewirken für den Endverbraucher hör- und/oder sichtbare Störeinflüsse, die zumindest teilweise nur mit aufwendigen Bauteilen, Schaltungen und/oder Verfahren so reduzierbar sind, dass sie für den Endverbraucher nicht mehr wahrnehmbar sind. Die Signalanteile des Rundfunksignals sind beim Fernsehen insbesondere das Audiosignal sowie das Videosignal, und beim Radio insbesondere das Audiosignal sowie das Datensignal. Beispiele solcher Störeinflüsse sind das Intercarrierrauschen, wenn der Abstand zwischen dem Audiosignal und dem Videosignal beim Fernsehen nicht exakt gleich ist, oder das Übersprechen zwischen den in Frequenzmultiplex modulierten Summen- und Differenzsignalen der beiden Kanäle eines Stereo-Audiosignals, durch das die Stereokanaltrennung gestört ist. Ein weiterer beispielsweise bei der Darstellung des Bildes beim Fernsehen, insbesondere der Farbdarstellung, sichtbarer Störeinfluss sind Differenzen der Gruppenlaufzeit von verschiedenfrequenten Signalteilen des Videosignals.

Aufgabe der Erfindung ist ein Verfahren zur Modulation eines Rundfunksignals, insbesondere für eine Gemeinschaftsanlage oder eine Kabelkopfstelle zur Umsetzung eines oder mehrerer digitaler Fernseh- und/oder Radioprogramme an einen oder mehrere Endverbraucher, zu schaffen, das die oben genannten Störeinflüsse reduziert oder sogar vermeidet, und das daher qualitativ hochwertiger ist, sowie eine Vorrichtung zur Durchführung des Verfahrens, die kostengünstiger ist und weniger Raum einnimmt.

Die Aufgabe wird gelöst mit einem Verfahren zur Modulation eines Rundfunksignals, insbesondere für eine Gemeinschaftsanlage oder eine Kabelkopfstelle zur Verteilung von digitalen Audiosignalen, Videosignalen und/oder Datensignalen an einen oder mehrere Endverbraucher und insbesondere zur Umsetzung eines oder mehrerer digitaler Fernseh- und/oder Radioprogramme, wobei das Rundfunksignal zumindest ein erstes Basisband-Signal und ein zweites Basisband-Signal umfasst, wobei die Umsetzung des ersten Basisband-Signals und des zweiten Basisband-Signals vollständig digital erfolgt und die Addition des ersten Basisband-Signals und des zweiten Basisband-Signals zu einem Gesamtsignal umfasst.

Ein Basisband-Signal im Sinne der Erfindung ist ein digitales Video-, Audio- oder Datensignal. Der Fachmann weiß, dass ein analoges Basisbandsignal bevorzugt über einen analogen Basisbandkanal übertragen wird, dass ein analoges Basisbandsignal durch analog-digital Wandlung in ein digitales Basisbandsignal wandelbar ist, dass ein digitales Basisbandsignal bevorzugt über einen digitalen Basisbandkanal übertragen wird, und dass ein Bandpasskanal mit Modulator und Demodulator als Basisbandkanal aufgefasst werden kann. Der Fachmann versteht daher, dass ein Basisband-Signal aus einem analogen Basisbandsignal durch analog-digital Wandelung gewandelt sein kann, und/oder dass ein Basisband-Signal ein in den Basisband-Bereich moduliertes Bandpasssignal sein kann.

Die Umsetzung eines Signals im Sinne der Erfindung umfasst jede Bearbeitung des Signals mit beliebigen Verfahren, insbesondere zum analog-digital oder digital-analog Wandeln, zum Filtern, Modulieren, Multiplexen des Signals oder das Addieren oder Multiplizieren des Signals zu bzw. mit zumindest einem weiteren Signal. Weiterhin umfasst die Umsetzung sowohl das digitale als auch das analoge Bearbeiten des Signals, wobei das Signal sowohl in analoger als auch in digitaler Form vorliegen kann.

Erfindungsgemäß erfolgt die Umsetzung des ersten sowie des zweiten Basisband-Signals vollständig digital.

Da die Umsetzung des ersten und des zweiten Basisband-Signals vollständig digital erfolgt, sind die bei analoger Verarbeitung analoger Signale relevanten Störeinflüsse erheblich geringer oder treten gar nicht auf. Insbesondere ein Übersprechen aufgrund von Phasen- oder Frequenzverschiebungen, beispielsweise das Übersprechen des Videosignals in das Audiosignal beim Fernsehen oder der Stereokanäle beim Radio, tritt nicht auf. Das Intercarrierrauschen ist daher erheblich geringer. Die Qualität der Umsetzung ist daher so hochwertig, dass im wesentlichen nur Störeinflüsse der Übertragung über den Kanal zum Endverbraucher, die sich an die Umsetzung des Rundfunksignals gemäß dem erfindungsgemäßen Verfahren anschließt, berücksichtigt werden müssen.

Vorzugsweise werden Störeffekte, die bei der Umsetzung des ersten und/oder zweiten Basisband-Signals auftreten, zumindest teilweise vorhergesagt und numerisch korrigiert, so dass sie für den Endverbraucher nicht mehr wahrnehmbar bzw. nicht störend sind. Die Genauigkeit der verwendeten Filter bzw. Verfahren kann im wesentlichen vorhergesagt werden und die Umsetzung wird den Anforderungen entsprechend ausgelegt.

Vorzugsweise ist das erste Basisband-Signal und/oder das zweite Basisband-Signal ein digitales Audio-, ein digitales Video- oder ein digitales Datensignal. Der Fachmann versteht, dass das erste sowie das zweite Basisband-Signal jedes für das digitale Fernsehen und/oder Radio bekannte, abgetastete und quantisierte analoge Basisbandsignal ist. Das digitale Audiosignal ist besonders bevorzugt ein I²S-Signal (quasi Norm verschiedener Hersteller, Inter IC-Sound) oder ein S/P DIF-Signal (Sony/Philips Digital, Interface). Das digitale Videosignal ist bevorzugt ein ITU-normiertes Signal (International Telecommunication Union), insbesondere gemäß den Normen BT.601 oder BT.656.

Bevorzugt ist das Gesamtsignal ein digitales Gesamtsignal in einem trägerfrequenten Bereich. Ein Signal in einem trägerfrequenten Bereich bzw. ein trägerfrequentes Signal im Sinne der Erfindung ist mit einem Signal einer Trägerfrequenz größer 0Hz moduliert und daher gegenüber einem Basisbandsignal bezüglich seiner Frequenz um die Trägerfrequenz verschoben. Ein trägerfrequentes Signal im Sinne der Erfindung ist daher ein gegenüber einem Signal im Basisbandbereich verschobenes Signal, insbesondere im Zwischenfrequenzbereich oder im Hochfrequenzbereich.

Bevorzugt erfolgt die Umsetzung des ersten Basisband-Signals und des zweiten Basisband-Signals vom Basisbandbereich in den trägerfrequenten Bereich digital. Da sowohl das erste Basisband-Signal als auch das zweite Basisband-Signal digital umgesetzt werden, sind Störeinflüsse für beide Signale im wesentlichen vorhersagbar und korrigierbar.

Bevorzugt werden das erste Basisband-Signal und das zweite Basisband-Signal synchron umgesetzt. Synchrone Umsetzung im Sinne der Erfindung ist eine gleichgetaktete Umsetzung zumindest zweier Signale. Der Fachmann versteht, dass zur digitalen Bearbeitung des Gesamtsignals eine Abtastratenkonvertierung erforderlich ist, so dass die Abtastrate des ersten Basisband-Signals und des zweiten Basisband-Signals zumindest bei der Addition identisch sind und keine Fehler durch einen Versatz der Abtastraten auftreten. Ganz besonders bevorzugt erfolgt die Umsetzung zumindest teilweise getrennt, bis das erste und das zweite Basisband-Signal zum Gesamtsignal addiert werden.

Bevorzugt ist das Rundfunksignal ein QPSK-moduliertes, ein QAM-moduliertes oder ein COFDM-moduliertes digitales Signal, Der Fachmann versteht, dass das Rundfunksignal gleichzeitig sowohl das erste Basisband-Signal, als auch das zweite Basisband-Signal als Signalanteile umfasst. Der Empfang und die Demodulation des Rundfunksignals in das erste und das zweite Basisband-Signal erfolgen mit herkömmlichen Verfahren und Vorrichtungen.

In einer bevorzugten Ausführungsform ist das erste Basisband-Signal ein digitales Videosignal und das zweite Basisband-Signal ein digitales Audiosignal. In dieser Ausführungsform eignet sich das Verfahren zur Umsetzung eines digitalen Fernsehprogramms.

Bevorzugt umfasst die Umsetzung des digitalen Videosignals eine digitale Restseitenband-Tiefpassfilterung zur Reduktion der Bandbreite des digitalen Videosignals.

Ebenfalls bevorzugt wird das digitale Gesamtsignal digital interpoliert. Durch die Interpolation können Aliaseffekte vermieden werden, die bei der Umsetzung zu unerwünschten Signalanteilen führen würden.

Vorzugsweise wird das digitale Gesamtsignal nach der Interpolation in ein digitales Ausgangssignal im Zwischenfrequenzbereich digital quadraturmoduliert. Bis zum Ausgangssignal im Zwischenfrequenzbereich ist daher kein analoges Multiplizieren der Basisband-Signale und des Gesamtsignals nötig. Daher werden die beim Multiplizieren auftretenden Unsymmetrien, unzulängliche Trägerunterdrückung sowie Nichtlinearitäten vermieden. Das Ausgangssignal umfasst das umgesetzte Audiosignal und das umgesetzte Videosignal im Zwischenfrequenzbereich, gleichzeitig, gemeinsam und in digitaler Form.

In einer ebenfalls bevorzugten Ausführungsform ist das erste Basisband-Signal ein digitales Datensignal und das zweite Basisband-Signal ein digitales Audiosignal. In dieser Ausführungsform eignet sich das Verfahren zur Umsetzung eines digitalen Radioprogramms.

Vorzugsweise wird das digitale Gesamtsignal in ein digitales Ausgangssignal im Hochfrequenzbereich digital frequenzmoduliert. Daher wird das analoge Umsetzen im Falle der Umsetzung eines digitalen Radioprogramms sogar vollständig vermieden. In dieser Ausführungsform umfasst das Ausgangssignal das umgesetzte Audiosignal und das umgesetzte Datensignal im Hochfrequenzbereich, gleichzeitig, gemeinsam und in digitaler Form.

Die folgenden Ausführungen gelten für alle oben genannten Ausführungsformen des Verfahrens.

Die Aufgabe wird ebenfalls gelöst mit einem Modulator zur Durchführung des erfindungsgemäßen Verfahrens, wobei der Modulator einen programmierbaren elektronischen Baustein umfasst. Bevorzugt ist der programmierbare elektronische Baustein ein programmierbarer Logikbaustein. Als programmierbarer elektronischer Baustein eignet sich beispielsweise ein digitaler Signalprozessor (DSP) oder ein Field Progammable Gate Array (FPGA). Aufgrund der beim FPGA möglichen parallelen Verarbeitung wird das FPGA gegenüber dem DSP bevorzugt. Vorzugsweise wird für die gesamte digitale Umsetzung des ersten und zweiten Basisband-Signals in das Ausgangssignal im wesentlichen nur der programmierbare elektronische Baustein mit seiner Beschaltung benötigt. Die benötigte Bauteilezahl und -vielfalt ist daher erheblich geringer im Vergleich zur Realisierung des Modulators mit zumindest teilweiser analoger Umsetzung und die Schaltung kann erheblich kleiner gebaut werden. Sie ist daher auch kostengünstiger herstellbar.

Die Aufgabe wird weiterhin gelöst durch die Verwendung des erfindungsgemäßen Modulators in einer Kabelkopfstelle. Eine Kabelkopfstelle im Sinne der Erfindung umfasst den herkömmlich realisierten Empfang und die Demodulation des Rundfunksignals bis zum ersten und zweiten Basisband-Signal, den erfindungsgemäßen Modulator, sowie die Wandlung des digitalen Ausgangssignals des erfindungsgemäßen Modulators in ein Endverbrauchersignal.

Bevorzugt erfolgt eine digital-analog-Umwandlung des digitalen Ausgangssignals innerhalb der Kabelkopfstelle in ein analoges Ausgangssignal. Die digital-analog-Umwandlung schließt sich daher der Umsetzung der Basisband-Signale im erfindungsgemäßen Modulator an.

Ebenfalls bevorzugt ist das Endverbrauchersignal am Ausgang der Kabelkopfstelle ein analoges Endverbrauchersignal im Hochfrequenzbereich.

Die erfindungsgemäße Kabelkopfstelle wird ganz besonders bevorzugt für die Umsetzung eines digitalen Satelliten-Fernsehprogramms als Rundfunksignal in das für Kabelnetze übliche Modulationsverfahren genutzt. Oder die erfindungsgemäße Kabelkopfstelle wird ebenfalls bevorzugt für die Umsetzung eines digitalen Fernsehprogramms als Rundfunksignal in ein normgerechtes PAL- Signal im Frequenzbereich 47 - 862MHz, beispielsweise DVB-S nach PAL-Umsetzung, genutzt, wobei das Endverbrauchersignal das normgerechte PAL-Signal ist. Anstelle der Umsetzung in ein normgerechtes PAL-Signal ist ebenfalls die Umsetzung in ein SECAM- oder NTSC-Signal möglich. Ebenso besonders bevorzugt ist die Umsetzung eines digitalen SAT-Radio-Programms als Rundfunksignal in ein normgerechtes UKW-Signal im Frequenzbereich 87,5 - 108 MHz, beispielsweise QPSK nach UKW-Umsetzung, wobei das Endverbrauchersignal das normgerechte UKW-Signal ist. Der Fachmann versteht, dass die Umsetzung nicht auf die genannten Beispiele beschränkt ist, sondern alle bekannten Übertragungskanäle und alle bekannten analogen Fernseh- bzw. Radiosignale als Endverbrauchersignale umfasst. Beim Endverbraucher können die Fernseh- bzw. Radioprogramme mit herkömmlichen Empfängern verarbeitet werden.

Ein Endverbrauchersignal im Sinne der Erfindung ist daher jedes normgerechte, analoge Signal im Hochfrequenzbereich, das von einem herkömmlichen Endgerät verarbeitet werden kann. Ein herkömmliches Endgerät ist beispielsweise ein Radio oder ein Fernseher (sowohl schwarz-weiß, als auch Farbfernseher).

Das erfindungsgemäße Verfahren eignet sich für Gemeinschaftsanlagen für einen bis zu mehrere (hundert-)tausend Endverbraucher.

Im Folgenden wird die Erfindung anhand von Figuren beschrieben. Die Figuren sind lediglich beispielhaft und schränken den allgemeinen Erfindungsgedanken nicht ein.
- **Figur 1**: zeigt einen Modulator zur Durchführung des erfindungsgemäßen Verfahrens für die digitale Modulation eines analogen Fernsehprogramms.
- **Figur 2**: zeigt einen Modulator zur Durchführung des erfindungsgemäßen Verfahrens für die digitale Modulation eines analogen Radioprogramms.
- **Figur 3**: zeigt ein Spektrum eines Stereo-Multiplex-Signals.
- **Figur 4**: zeigt die Sprektren eines trägerfrequenten PAL-Signals und zweier Ton-Signale.
- **Figur 5**: zeigt schematisch die Anordnung einer erfindungsgemäßen Kabelkopfstelle bzw. einen erfindungsgemäßen Modulator in der Übertragungsstrecke eines digitalen Fernsehprogramms.

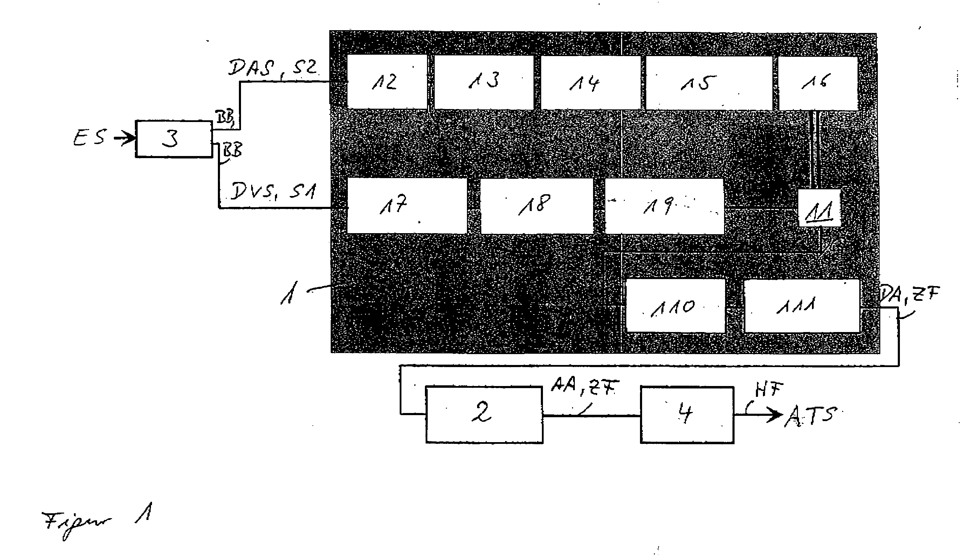

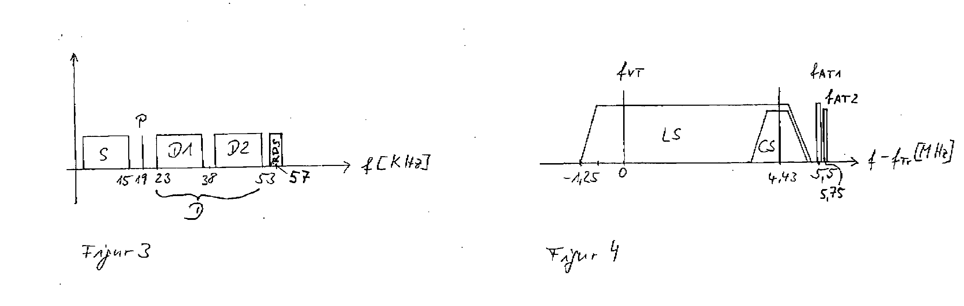

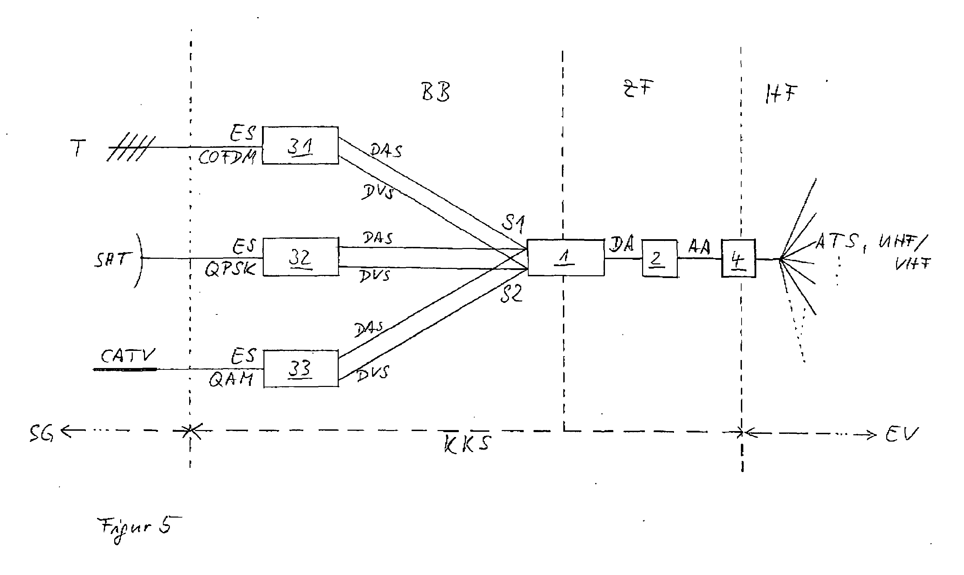

**Figur 1** zeigt einen Modulator 1 zur Durchführung des erfindungsgemäßen Verfahrens für die Modulation eines digitalen Fernsehprogramms. Am Eingang eines Frontends 3 liegt ein Sendergemisch SG (s. Figur 5) vor, das ein Rundfunksignal ES in einer einem Übertragungskanal angepassten modulierten Form beinhaltet. Im Frontend 3 wird das Rundfunksignal ES vom Sendergemisch SG getrennt und in den Basisbandbereich BB überführt. Das Rundfunksignal ES umfasst als Signalanteile ein digitales Audiosignal DAS sowie ein digitales Videosignal DVS. Am Eingang des erfindungsgemäßen Modulators 1 liegt das digitale Videosignal DVS als ein erstes Basisband-Signal S1, und das digitale Audiosignal DAS als ein zweites Basisband-Signal S2 an. Der erfindungsgemäße Modulator 1 ist im wesentlichen in einem einzigen, programmierbaren Logikbaustein, vorzugsweise in einem FPGA, implementiert. Das erste und das zweite Basisband-Signal S1, S2 liegen daher im Logikbaustein als Bitfolge vor. Zur Aufbereitung des ersten Basisband-Signals S1, das das digitale Videosignal DVS beinhaltet, erfolgt zunächst die Umwandlung des digitalen Videosignals in eine Bitfolge (die hier nicht explizit eingezeichnet ist) und dann eine Gruppenlaufzeit-Vorentzerrung 17, eine Negativ- Restträger-Modulation 18 und anschließend eine Restseitenband-Tiefpassfilterung 19. Die Gruppenlaufzeit-Vorentzerrung 17 bewirkt eine Korrektur von Gruppenlaufzeitfehlern verschiedenfrequenter Signalanteile des digitalen Videosignals DVS, die im nachfolgenden Empfänger (beispielsweise einem Fernseher) auftreten. Bei der Negativ-Restträger-Modulation 18 wird das BAS-Signal invertiert, so dass eine hohe Amplitude des BAS-Signals einem dunklen Bildpunkt entspricht. Der Fachmann versteht, dass auch eine Positiv- Restträger- Modulation angewendet werden kann, bei der eine hohe Amplitude des BAS-Signals einem hellen Bildpunkt entspricht. Das bei der Modulation auftretende untere Seitenband wird bei der nachfolgenden Restseitenband-Tiefpassfilterung 19 zumindest teilweise unterdrückt. Synchron dazu wird das zweite Basisband-Signal S2, das das digitale Audiosignal DAS beinhaltet und beispielsweise ein I²S-Signal ist, umgesetzt. Das zweite Basisband-Signal S2 wird dazu ebenfalls zunächst in eine Bitfolge gewandelt (hier nicht gezeigt). Dann wird das zweite Basisband-Signal S2 in zwei zweite Basisband-Teilsignale S2', S2" aufgeteilt 12, wobei die beiden zweiten Basisband-Teilsignale S2', S2" jeweils die Information für einen rechten und einen linken Stereo- Audiokanal beinhalten, sowie mit einem Tiefpassfilter, bevorzugt einem 15kHz-Tiefpassfilter, gefiltert. Anschließend werden die beiden zweiten Basisband-Teilsignale S2', S2" gemäß dem Zweiton-Verfahren umgesetzt. Da die Störleistung gegen höhere Frequenzen bei einem frequenzmodulierten Signal ansteigt, wird, um die Störfestigkeit der hohen Töne zu verbessern, vorab eine Preemphase 14 angewandt, bei der höherfrequente Anteile auf Kosten niederfrequenter Anteile betont werden, so dass der Störabstand zumindest bei gleicher Sendeleistung im wesentlichen frequenzunabhängig wird. Im Empfänger wird die Verformung durch eine Deemphase rückgängig gemacht. Anschließend wird die Stereo-Zweikanal-Kennung 16 additiv hinzugefügt. Danach werden die so umgesetzten beiden zweiten Basisband-Teilsignale S2', S2" frequenzmoduliert 16. Das nun vorliegende erste Basisband-Signal S1 und die nun vorliegenden zweiten Basisband-Teilsignale S2', S2" werden zum Gesamtsignal DG addiert 11. Dies erfolgt ebenfalls numerisch, so dass das Gesamtsignal DG digital vorliegt. Das erste Basisband-Signal S1 wird bei der Restseitenband-Tiefpassfilterung 19 bzw. die beiden zweiten Basisband-Teilsignale S2', S2" werden bei der Frequenzmodulation 16 jeweils in einen niedrigen trägerfrequenten Bereich überführt. Da die Zwischenfrequenz ZF höher ist, als die Abtastfrequenz des Gesamtsignals DG, werden weitere Abtastwerte des Gesamtsignals DG anschließend interpoliert 110. Erst dann erfolgt eine Quadraturmodulation 111, bei der das Gesamtsignal DG in den Zwischenfrequenzbereich ZF überführt wird. Das Ausgangssignal DA des Quadraturmodulators 111 ist das Ausgangssignal DA des erfindungsgemäßen Modulators 1.

Das digitale Ausgangssignal DA im Zwischenfrequenzbereich ZF wird digital-analog 2 in ein analoges Ausgangssignal AA im Zwischenfrequenzbereich ZF gewandelt. Die einzige analoge Multiplikation des ursprünglichen Rundfunksignals ES erfolgt bei Anwendung des erfindungsgemäßen Verfahrens bei der abschließenden Konvertierung 4 des analogen Ausgangssignals AA vom Zwischenfrequenzbereich ZF in den Hochfrequenzbereich HF in einem ZF-HF-Konverter.

Das Endverbrauchersignal ATS am Ausgang des ZF-HF-Konverters 4 ist bevorzugt ein analoges VHF-UHF-Signal.

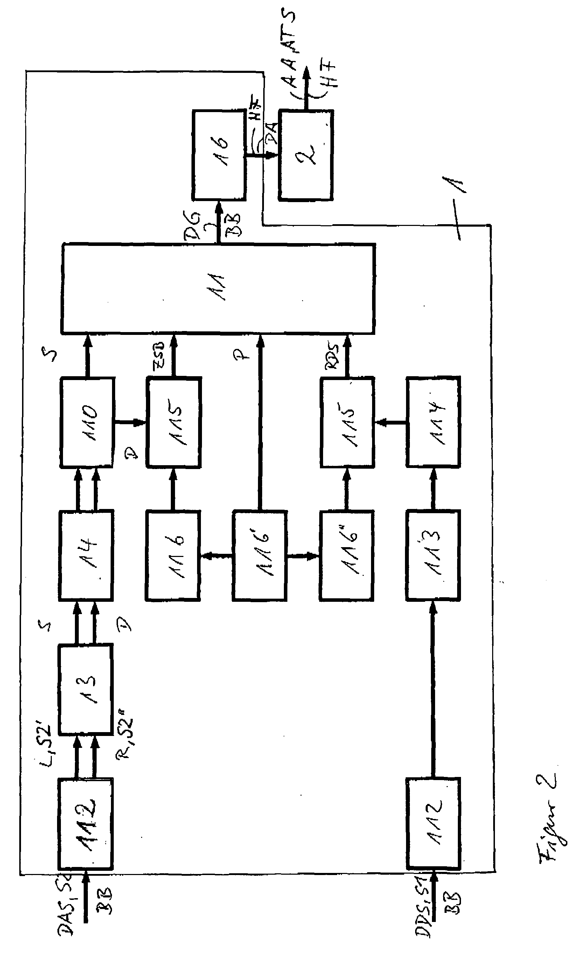

**Figur 2** zeigt einen erfindungsgemäßen Modulator 1 zur Durchführung des erfindungsgemäßen Verfahrens für die Modulation eines digitalen Radioprogramms ES. Die Darstellung zeigt als Eingangssignale des erfindungsgemäßen Modulators als erstes Basisband-Signal S1 ein digitales Datensignal DDS im Basisbandbereich BB und als zweites Basisband-Signal S2 ein digitales Audiosignal DAS, die beide dem erfindungsgemäßen Modulator 1 an jeweils einer Eingangsschnittstelle 112 zugeführt werden, in der sie in eine Bitfolge gewandelt werden. Das Datensignal DDS wird gemäß dem RDS- Standard (insbesondere EN 50067) zunächst RDS-Codiert (Radio Data System) 113. Die RDS-Codierung ermöglicht das Hinterlegen weiterer Informationen wie beispielsweise den Programmtyp oder eine bevorzugte Musikart. Nach der RDS-Codierung 113 wird das Datensignal DDS spektral geformt 114. Das zweite Basisband-Signal S2 wird innerhalb des erfindungsgemäßen Modulators 1 synchron zum ersten Basisband-Signal S1 verarbeitet. Das zweite Basisband-Signal S2 wird in der Eingangsschnittstelle 112 in zwei zweite Basisband-Teilsignale S2', S2", nämlich das Links-Signal L eines linken Audiokanals und das Rechts-Signal R eines rechten Audiokanals, getrennt. Anschließend wird die Stereomatrix-Verarbeitung 13 des Links- und des Rechts-Signals in ein Summensignal S und ein Differenzsignal D durchgeführt (s. **Figur 3**). Es schließt sich die bereits in **Figur 1** erläuterte Preemphase 14 und eine Interpolation 110 des Summen- und des Differenzsignals S, D an, bei der jeweils zusätzliche Abtastwerte des Summensignals S und des Differenzsignals D berechnet werden. Weiterhin werden die Trägerfrequenz 116 für das zweiseitenbandmodulierte Differenzsignal D, der Pilotton 116', P sowie die Trägerfrequenz 116" für das spektral geformte Datensignal DDS synthetisiert. Das so umgesetzte Summensignal S, das mit seiner Trägerfrequenz digital multiplizierte Differenzsignal ZSB, der Pilotton P sowie das mit seiner Trägerfrequenz digital multiplizierte spektral geformte Datensignal RDS werden anschließend zum Gesamtsignal 11 addiert. Das Gesamtsignal ist ein digitales Gesamtsignal DG im Basisbandbereich BB, wobei jedoch das mit seiner Trägerfrequenz digital multiplizierte Differenzsignal ZSB sowie das mit seiner Trägerfrequenz digital multiplizierte spektral geformte Datensignal RDS trägerfrequente Signale sind. Das digitale Gesamtsignal DG wird anschließend durch Frequenzmodulation 16 in den Hochfrequenzbereich HF überführt. Am Ausgang des erfindungsgemäßen Modulators 1 liegt es als digitales Ausgangssignal DA im Hochfrequenzbereich HF vor. Abschließend wird das digitale Ausgangssignal DA digital-analog 2 in ein analoges Ausgangssignal AA im Hochfrequenzbereich HF gewandelt. Das analoge Ausgangssignal AA ist das analoge Endverbrauchersignal ATS und vorzugsweise ein FM-UKW-Signal.

Bei beiden in den **Figuren 1 und 2** dargestellten Ausführungsformen erfolgt die Umsetzung der Basisband-Signale S1, S2, und daher auch die Umsetzung des Gesamtsignals DG, vollständig digital, so dass die als Bitfolge vorliegenden Basisband-Signale S1, S2 mittels mathematischer Transformationen in das digitale Ausgangssignal DA überführt werden. Es ist zu jedem Zeitpunkt des Verfahrens erkennbar, welche Störeinflüsse bei der Aufbereitung der Basisband-Signale S1, S2 zugelassen werden können, ohne die ursprünglich in den Basisband-Signalen S1, S2 enthaltene Information zu verfälschen. Störeinflüsse sind im wesentlichen vorhersagbar und können daher zumindest teilweise numerisch vorab korrigiert werden.

**Figur 3** zeigt das Spektrum eines Stereo-Multiplex-Signals. Ein Stereosignal besteht aus einem L-Signal für den linken Audiokanal und einem R-Signal für den rechten Audiokanal. Aus dem L- und dem R-Signal wird ein Summensignal S und ein Differenzsignal D gebildet. Das Summen- und das Differenzsignal S, D werden im Frequenzmultiplex übertragen. Das Differenzsignal D wird in Zweiseitenband-Amplutudenmodulation ohne Träger moduliert. Dabei entsteht ein oberes Seitenband D2 und ein unteres Seitenband D1. Da der Träger des zweiseitenbandamplitudenmodulierten Differenzsignals D1, D2 nicht mit übertragen wird, wird ersatzweise ein Pilotton P hinzugefügt, so dass der Träger auf der Empfängerseite regenerierbar ist. Das digitale Datensignal RDS belegt ein Frequenzband, das oberhalb dem oberen Seitenband D2 angeordnet ist. Ein solches Stereo-Multiplex-Signal liegt im erfindungsgemäßen Modulator 1 in digitaler Form zwischen dem Addierer 11 und der Frequenz- Modulation 16 in **Figur 2** an.

**Figur 4** zeigt das Spektrum eines trägerfrequenten PAL-Signals. Um die Farbinformationen der Farbanteile Rot, Grün und Blau für einen Schwarzweißfernseher kompatibel zu übertragen, wird ein Luminanzsignal LS, das die Helligkeitsinformation enthält, und ein Chrominanzsignal CS, aus dem sich die Farbanteile berechnen lassen, generiert. Das Luminanzsignal LS und das Chrominanzsignal CS werden addiert. Außerdem werden dem Signal die beiden Tonsignale hinzuaddiert. Die Darstellung zeigt das Spektrum um die Trägerfrequenz f_{TR} des Videosignals verschoben, so dass der Bildträger f_{VT} bei 0Hz und die Tonträger f_{AT1} bei 5,5MHz bzw. f_{AT2} bei 5,75 MHz angeordnet sind. Ein solches Signal liegt am Ausgang eines erfindungsgemäßen Modulators 1 in digitaler Form (s. **Figur 1**) an.

**Figur 5** zeigt schematisch die Anordnung einer erfindungsgemäßen Kabelkopfstelle KKS bzw. eines erfindungsgemäßen Modulators 1 in der Übertragungsstrecke eines digitalen Fernsehprogramms. Das zu verarbeitende Rundfunksignal ES ist in dem über terrestrische Übertragung T, über Satellitenübertragung SAT oder über Kabelübertragung CATV übertragenen Sendergemisch SG enthalten. Bei terrestrischer Übertragung T ist das Rundfunksignal ES bevorzugt COFDMmoduliert, bei Satellitenübertragung SAT bevorzugt QPSK-moduliert und bei Kabelübertragung CATV bevorzugt QAM-moduliert. In einem Frontend 3, 31, 32, 33 wird das Rundfunksignal ES vom Sendergemisch SG getrennt. Beim digitalen Fernsehen beinhaltet das Rundfunksignal ES beispielsweise ein digitalisiertes FBAS-Signal als Videosignal DVS sowie ein digitalisiertes (Stereo-) Audiosignal DAS. Das digitale Audiosignal DAS sowie das digitale Videosignal DVS werden im Frontend 3, 31, 32, 33 in den Basisbandbereich BB überführt und liegen danach als Basisband-Signale am Eingang des erfindungsgemäßen Modulators 1 an. In dem erfindungsgemäßen Modulator 1 werden das digitale Audiosignal DAS und das digitale Videosignal DVS synchron umgesetzt (s. **Figur 1**), zum Gesamtsignal DG addiert und durch eine Quadraturmodulation 111 (s. **Figur 1**) in den Zwischenfrequenzbereich ZF überführt. Am Ausgang des erfindungsgemäßen Modulators 1 liegt daher ein digitales Ausgangssignal DA im Zwischenfrequenzbereich ZF an. Erst danach wird das digitale Ausgangssignal DA digital-analog gewandelt 2 und anschließend in einem Konverter 4 vom Zwischenfrequenzbereich ZF in den Hochfrequenzbereich HF überführt. Am Ausgang der Kabelkopfstelle KKS liegt daher für den/die Endverbraucher EV ein analoges Endverbrauchersignal ATS im Hochfrequenzbereich HF, beispielsweise im UHF/VHF-Bereich, an.

### Bezugszeichenliste:

- 1: Modulator
- 11: Addierer
- 12: Aufteilung in zwei Kanäle sowie Tiefpassfilterung
- 13: Stereomatrix
- 14: Preemphase
- 15: Stereo-Zweikanalkennung
- 16: Frequenzmodulation
- 17: Gruppenlaufzeit-Vorentzerrung
- 18: Negativ- Restträger- Modulation
- 19: Restseitenband-Tiefpassfilterung
- 110: Interpolation
- 111: IQ-Modulation
- 112: Eingangsschnittstelle
- 113: RDS-Coder
- 114: spektrale Formung
- 115: Multiplizierer
- 116: 38kHz-Synthese
- 116': 19kHz-Synthese
- 116": 57kHz-Synthese
- 2: D/A-Wandler
- 3,31,32,33: Frontend
- 4: ZF-HF-Konverter
- SG: Sendergemisch
- EV: Endverbraucher
- ES: Eingangssignal
- S1: erstes Basisband-Signal
- S2: zweites Basisband-Signal
- S2', S2": zweite Basisband-Teilsignale
- DAS: digitales Audiosignal
- DVS: digitales Videosignal
- DDS: digitales Datensignal
- DG: digitales Gesamtsignal
- DA: digitales Ausgangssignal
- AA: analoges Ausgangssignal
- ATS: analoges Endverbrauchersignal an einen oder mehrere Endverbraucher
- BB: Basisbandbereich
- ZF: Zwischenfrequenzbereich
- HF: Hochfrequenzbereich
- FM: Frequenzmodulation
- ZSB: Zweiseitenband
- RDS: Radio Data System
- S: Summensignal
- D: Differenzsignal
- D1: unteres Seitenband (LSB, Lower Side Band) des Differenzsignals
- D2: oberes Seitenband (USB, Upper Side Band) der Differenzsignals
- P: Pilot
- R: rechts
- L: links
- LS: Luminanzsignal
- CS: Chrominanzsignal
- f_{VT}: Bildträger
- f_{AT1}, f_{AT2}: Tonträger
- f_{TR}: **Trägerfrequenz des Videosignals**
- f: Frequenz, Einheiten: kHz = 10³Hz, MHz = 10⁶Hz
- T: terrestrische Fernsehübertragung
- SAT: Satellitenfernsehen
- CATV: Kabelfernsehen

## Patentansprüche

1. Verfahren zur Modulation eines Rundfunksignals (ES), insbesondere für eine Gemeinschaftsanlage oder eine Kabelkopfstelle (KKS) zur Verteilung von digitalen Audiosignalen (DAS), Videosignalen (DVS) und/oder Datensignalen (DDS) an einen oder mehrere Endverbraucher und insbesondere zur Umsetzung eines oder mehrerer digitaler Fernseh- und/oder Radioprogramme, wobei das Rundfunksignal (ES) zumindest ein erstes Basisband-Signal (S1) und ein zweites Basisband-Signal (S2) umfasst, **dadurch gekennzeichnet, dass** die Umsetzung des ersten Basisband-Signals (S1) und des zweiten Basisband-Signals (S2) vollständig digital erfolgt und die Addition (11) des ersten Basisband-Signals (S1) und des zweiten Basisband-Signals (S2) zu einem Gesamtsignal (DG) umfasst.

2. Verfahren nach Anspruch 1, **dadurch gekennzeichnet, dass** Störeffekte, die bei der Umsetzung des ersten Basisband-Signals (S1) und/oder des zweiten Basisband-Signals (S2) auftreten, vorhergesagt und zumindest teilweise numerisch korrigiert werden.

3. Verfahren nach einem der vorherigen Ansprüche, **dadurch gekennzeichnet, dass** das erste Basisband-Signal (S1) und/oder das zweite Basisband-Signal (S2) ein digitales Audio- (DAS), ein digitales Video- (DVS) oder ein digitales Datensignal (DDS) ist.

4. Verfahren nach einem der vorherigen Ansprüche, **dadurch gekennzeichnet, dass** das Gesamtsignal ein digitales Gesamtsignal (DGS) in einem trägerfrequenten Bereich (ZF, HF) ist.

5. Verfahren nach einem der vorherigen Ansprüche, **dadurch gekennzeichnet, dass** die Umsetzung des ersten Basisband-Signals (S1) und des zweiten Basisband-Signals (S2) vom Basisbandbereich (BB) in den trägerfrequenten Bereich (ZF, HF) digital erfolgt.

6. Verfahren nach einem der vorherigen Ansprüche, **dadurch gekennzeichnet, dass** das erste Basisband-Signal (S1) und das zweite Basisband-Signal (S2) synchron umgesetzt werden.

7. Verfahren nach einem der vorherigen Ansprüche, **dadurch gekennzeichnet, dass** das Rundfunksignal (ES) ein QPSK-moduliertes, ein QAM-moduliertes oder ein COFDM-moduliertes digitales Signal ist.

8. Verfahren nach einem der vorherigen Ansprüche, **dadurch gekennzeichnet, dass** das erste Basisband-Signal (S1) ein digitales Videosignal (DVS) und das zweite Basisband-Signal (S2) ein digitales Audiosignal (DAS) ist.

9. Verfahren nach einem der vorherigen Ansprüche, **dadurch gekennzeichnet, dass** die Umsetzung des digitalen Videosignals (DVS) eine digitale Restseitenband-Tiefpassfilterung (19) umfasst.

10. Verfahren nach einem der vorherigen Ansprüche, **dadurch gekennzeichnet, dass** das digitale Gesamtsignal (DGS) digital interpoliert (110) wird.

11. Verfahren nach einem der vorherigen Ansprüche, **dadurch gekennzeichnet, dass** das digitale Gesamtsignal (DGS) nach der Interpolation (110) in ein digitales Ausgangssignal (DA) im Zwischenfrequenzbereich (ZF) digital quadraturmoduliert (111) wird.

12. Verfahren nach einem der Ansprüche 1-6, **dadurch gekennzeichnet, dass** das erste Basisband-Signal (S1) ein digitales Datensignal (DDS) und das zweite Basisband-Signal (S2) ein digitales Audiosignal (DAS) ist.

13. Verfahren nach Anspruch 11, **dadurch gekennzeichnet, dass** das digitale Gesamtsignal (DG) in ein digitales Ausgangssignal (DA) im Hochfrequenzbereich (HF) digital frequenzmoduliert (16) wird.

14. Modulator (1) zur Durchführung des Verfahrens nach einem der vorherigen Ansprüche, **dadurch gekennzeichnet, dass** sie einen programmierbaren elektronischen Baustein umfasst.

15. Verwendung eines Modulators (1) nach Anspruch 13 in einer Kabelkopfstelle (KKS).

16. Verwendung nach Anspruch 14, **dadurch gekennzeichnet, dass** eine digital-analog-Umwandlung (2) des digitalen Ausgangssignals (DA) innerhalb der Kabelkopfstelle (KKS) in ein analoges Ausgangssignal (AA) erfolgt.

17. Verwendung nach einem der Ansprüche 14 - 15, **dadurch gekennzeichnet, dass** das Endverbrauchersignal am Ausgang der Kabelkopfstelle (KKS) ein analoges Endverbrauchersignal (ATS) im Hochfrequenzbereich (HF) ist.
